(19) Europäisches Patentamt / European Patent Office / Office européen des brevets

(11) **EP 3 287 814 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(51) Int Cl.:
*G01V 1/08* (2006.01)   *E21D 9/00* (2006.01)
*G01V 1/13* (2006.01)

(21) Anmeldenummer: **16185227.2**

(22) Anmeldetag: **23.08.2016**

(54) **VERFAHREN ZUR VORAUS- UND SEITENERKUNDUNG IM TUNNELBAU**

METHOD OF EXPLORATION AHEAD AND ASIDE IN TUNNELLING

MÉTHODE D'EXPLORATION EN AVANT ET SUR LE COTÉ DANS LA CONSTRUCTION DE TUNNELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.02.2018 Patentblatt 2018/09**

(73) Patentinhaber: **Amberg Technologies AG**
**8105 Regensdorf-Watt (CH)**

(72) Erfinder:
• **Dickmann, Thomas**
**79793 Wutöschingen (DE)**

• **Krüger, Dirk**
**79761 Waldshut-Tiengen (DE)**

(74) Vertreter: **Kley, Hansjörg**
**Aeckerwiesenstrasse 9**
**8400 Winterthur (CH)**

(56) Entgegenhaltungen:
**EP-A2- 0 756 181        WO-A1-2015/175851**
**CN-A- 104 536 040        CN-B- 102 434 207**
**US-A1- 2012 314 539**

**EP 3 287 814 B1**

**Beschreibung**

Die vorliegende Erfindung bezieht sich auf ein Verfahren zur Voraus- und Seitenerkundung im Tunnelbau gemäss dem Patentanspruch 1.

Verfahren zur vortriebsbegleitenden Vorauserkundung im Tunnelbau sind unter dem Akronym TSP bekannt: TSP steht für «Tunnel Seismic Prediction». TSP ist eine geophysikalische Methode und verfolgt das Ziel, eine schnelle geologische und geotechnische Vorauserkundung im dreidimensionalen Raum durchzuführen, um die geologischen Kenndaten von Störzonen, Zonen hoher Klüftigkeit und von Karst kontinuierlich zu verbessern. Die Grundlagen dieser geophysikalischen Methode sind den Dokumenten

- «Integrated Seismic Imaging System For Geological Prediction During Tunnel Construction» [2];
- «Seismic prediction of geological structures ahead of the tunnel using tunnel surface waves» [6] und
- «Predicting ahead of the face» [9]

zu entnehmen.

Eine konsequente Anwendung dieser innovativen Technologie TSP erlaubt das Bauen sehr komplexer Untertagebauwerke innerhalb kurzer Zeit. Dabei setzen die Sicherheit und der Leistungsfortschritt des Vortriebs genügend gute Kenntnisse über die Felsstruktur voraus der Tunnelbrust voraus.

Das TSP-Messkonzept basiert auf der Aussendung von Raumwellen, die bevorzugt durch kleine Sprengladungen in dafür vorbereiteten Schusslöchern erzeugt werden, siehe dazu zB. die vorgenannten Dokumente [2] und [6] sowie das Dokument - «3D Tunnel Seismic Prediction» [8].
Treffen solche Raumwellen (Kompressions- und Scherwellen) auf Diskontinuitäten im Gebirge, wie sie Formationswechsel, Störflächen oder Karststrukturen darstellen, wird ein Teil der Energie reflektiert, der mit eigens dafür entwickelten Empfängern registriert wird. Die vorstehend aufgeführten Beispiele von Diskontinuitäten werden im Folgenden mit dem Oberbegriff Felsdiskontinuität bezeichnet. Mit der Aufzeichnung von zB 24 solcher Schüsse aus kleinen Bohrlöchern entlang einer Ulmenstrecke (=unterer Tunnelwandbereich) von etwa 46m (aus 23 Abständen zu 2m) wird eine Seismogramm-Sektion zusammengestellt, die durch eine zielgerichtete Datenverarbeitung derartige Reflektoren bzw. Felsdiskontinuitäten extrahiert. Diese extrahierten Abbildungen von Felsdiskontinuitäten werden in 2- und 3-dimensionalen Ansichten und auf die Tunnelachse bezogen dargestellt und beinhalten so ein mögliches geologisches Bild bzw. Gefahrenpotential etwa 150 Meter voraus der Tunnelbrust.

Es werden mindestens 18 als seismische Quelle dienende Schüsse in regelmässigen Distanzen im Bereich 1m bis 2m zueinander entlang einer Ulmenstrecke (hin- und wieder auch nur Tunnelwand genannt) benötigt, um ein aussagekräftiges Resultat zu erzielen. Besser sind jedoch 24 Schüsse. Das Bohren der mindestens 1,50m tiefen Schusslöcher mit einem Durchmesser von 32mm bis 45mm erfordert eine Vorbereitungszeit je nach Art der Bohrausrüstung (pneumatische Bohrstütze oder hydraulisch betriebener Bohrwagen) zwischen anderthalb und sechs Stunden für 24 Bohrungen. Zusätzlich zu den Bohrungen benötigt das anschliessende Schiessen/Zünden der kleinen Sprengladungen in den Bohrungen zwischen anderthalb und vier Stunden je nach Erfahrung und Geschicklichkeit der Anwender, da jeder Schuss einzeln ausgelöst werden muss und so bei jedem Schuss ein erforderlicher Sicherheitsabstand des Baustellenpersonals eingehalten werden muss. Das einzelne Schiessen ist erforderlich, um damit die Nullzeit eines Schusses mit einer hohen Genauigkeit mittels einer Auslösevorrichtung/Schiessmaschine zur Schussaufnahme aufnehmen zu können. Dazu wird eine Triggerbox für den Start der Signalaufzeichnung eingesetzt. Zwischen den einzelnen Schüssen muss durch Baupersonal das Schiesskabel an die nächste zu zündende Sprengladung geführt werden. Dies erklärt den relativ hohen Zeitbedarf von anderthalb bis vier Stunden.

Durch die Kenntnis der Nullzeiten aller aufeinanderfolgenden Schüsse in unterschiedlichen Distanzen zueinander, können die Ankunftszeiten der direkten und reflektierten Wellen genau bestimmt werden, um daraus wiederum die Geschwindigkeiten der durch das Gebirge laufenden Wellen zu berechnen. Diese Geschwindigkeiten geben Kenntnis über die Felsdiskontinuitäten voraus der Tunnelbrust und radial zum Tunnel.

Der gesamte Vorgang einer TSP-Messung inklusive der Erstellung der benötigten Bohrlöcher kann demzufolge bis zu zehn Stunden dauern. In vielen Fällen je nach verfügbarem Raum und Zugänglichkeit im Tunnelvortriebsbereich bewirken die TSP-Tätigkeiten von durchschnittlich sechs Stunden gleichzeitig eine Ausfallzeit für die Arbeiten des Tunnelvortriebs. Diese Verzögerungen können dazu führen, dass der Gesamtvortrieb hinter dem vorgeschriebenen Zeitplan bleibt, wenn die TSP-Tätigkeiten nicht von Beginn an im Zeitplan vorgesehen waren. Die Zeitverzögerungen führen zwangsweise auch zu Erhöhungen der zeitabhängigen Baustellenkosten wie Personalaufwendungen und das Vorhalten von Installationen und Energieausgaben.

Der vorstehend beschriebene Messablauf und Messaufbau erfolgt in Intervallen von ca. 120m bei einer Erkundungsreichweite von durchschnittlich 150m voraus der Tunnelbrust. Dabei nehmen die Genauigkeit der Ereignisbestimmung und die Auflösung von Gebirgsänderungen physikalisch bedingt mit der Erkundungsentfernung ab.

Andere unterschiedliche seismische Verfahren zur vortriebsbegleitenden Vorauserkundung im Tunnelbau unterscheiden sich vom vorgestellten Verfahren TSP mit kleinen Sprengladungen dadurch, dass sie keinen Sprengstoff als seismische Quelle verwenden und keine Bohrungen längs einer Ulmenstrecke benötigen. Entweder erzeugt ein direkt auf die Tunnelwand schlagender Impakthammer seismische Wellen, wodurch teilweise eine Zeitersparnis erreicht wird, jedoch zu Ungunsten der auszusendenden Wellenenergie, die eine wesentlich geringere Erkundungsreichweite erzielt gegenüber dem Einsatz von kleinen Sprengladungen.

Es können auch die Schneidwerkzeuge eines sich drehenden Schneidrads einer Tunnelbohrmaschine verwendet werden, die sich während des Vortriebs in die Tunnelbrust fräsen. Diese unkorrelierte Signalaussendung, die auch als passive Seismik bezeichnet wird, erzeugt zwar keine Ausfallzeit während des Vortriebs, jedoch lassen sich hiermit nur sehr grossräumige (> mehrere Tunneldurchmesser) und nur sehr signifikante Felsdiskontinuitäten wie zB deutliche Formationsunterschiede wie beispielsweise ein Bruch oder ein Übergang Granit zu Phyllit voraus erkennen.

Die Einzelheiten der vorgenannten Verfahren ohne Benutzung von Sprengladungen zur vortriebsbegleitenden Vorauserkundung können den Schriften

«Seismic-while-drilling by using tunnel boring machine noise» [1] und

«IMPULSGENERATOR, INSBESONDERE ZUR ANREGUNG SEISMISCHER WELLEN», WO 2009/077102 A1 [10]

entnommen werden.

Das Verfahren mit einer Signalaussendung durch das drehende Schneidrad einer Tunnelbohrmaschine erfordert zusätzlich die permanente Anwesenheit eines Geophysikers.

Weder mit Impakthammer noch mit passiver Seismik via die Schneidwerkzeuge einer Tunnelbohrmaschine kann die erforderliche Reichweite und Zuverlässigkeit der geforderten Vorauserkundung voraus der Tunnelbrust erreicht werden.

Das Verfahren gemäss der Schrift

«Rayleigh-to-shear wave conversion at the tunnel face - From 3D-FD modeling to ahead-of-drill exploration» [3] ist nur anwendbar beim Vorhandensein einer Tunnelbrust, dh beim Bau eines Tunnels. In jüngerer Zeit besteht die Forderung zur Sanierung von bestehenden Tunnels besonders hinsichtlich der Sicherheit, so sind Evakuations- oder sog. Sicherheitstunnel parallel zu bestehenden Tunnel zu erstellen. Die bestehenden Tunnel haben teilweise ein Alter von bis zu 100 Jahren und aus der damaligen Bauzeit sind keine Aufzeichnungen über die Felsstruktur vorhanden. Es ist daher auch ein Bedarf ausgewiesen, eine Voraus- und Seitenerkundung bei bestehenden Tunneln vorzunehmen. Diese Anforderung wird nicht von allen bekannten Verfahren zur Vorauserkundung erfüllt, da einzelne Verfahren eine Tunnelbrust zwingend voraussetzen, wie dies beispielsweise der Schrift [3] zu entnehmen ist: An der Tunnelbrust werden konvertierte Scherwellen verwendet. Wegen dieser neuen Anforderung der Vorauserkundung auch bei bestehenden Tunneln können die Verfahren mit der Tunnelbohrmaschine ganz offensichtlich nicht angewandt werden. CN 102 434 207 B (UNIV SHANDONG) 18. Juni 2014 (2014-06-18) offenbart ein Verfahren zur Voraus- und Seitenerkundung der einen Tunnelumgebenden Felsstruktur.

Der vorliegenden Erfindung liegt daher die Aufgabe zugrunde, ein Verfahren zur Vorauserkundung im Tunnelbau unter Benutzung von nicht zerstörenden Sprengladungen anzugeben, das die vorstehend genannten Ausfallzeiten signifikant verringert, ohne dass die Auswertung der direkten und reflektierten Wellen beeinträchtigt wird und welches Verfahren auch in bestehenden Tunneln verwendet werden kann, um zB parallele Sicherheitsstollen planen und bauen zu können.

Diese Aufgabe wird erfindungsgemäss gelöst durch ein Verfahren zur Voraus- und Seitenerkundung der einen Tunnel umgebenden Felsstruktur, wobei:

- auf einer Ulmenstrecke des Tunnels eine Mehrzahl von radial zum Tunnel angeordneten Schusslöchern je mit einer Sprengladung gefüllt werden;
- entfernt von den Schusslöchern wenigstens zwei auf beiden Ulmenstrecken paarweise gegenüberliegende Empfängerlöcher für die Aufnahme von Empfängern vorgesehen sind und die Empfänger durch das Zünden der Sprengladung erzeugte Schüsse ausgelöste direkte und von Felsdiskontinuitäten der Felsstruktur reflektierte Wellen registrieren;
- mehrere in aufeinanderfolgenden Schusslöchern befindliche Sprengladungen zu einer Schussgruppe zusammengefasst werden und nacheinander in einem zeitlichen Abstand gezündet werden;
- die von den Empfängern registrierten Wellen zu einer den einzelnen Schüssen zugeordneten Aufzeichnung als Einzelspuren separiert werden und so dem Auswerteprogramm zugeführt werden;
- mittels des Auswerteprogramms diese Wellen zu einer die Felsdiskontinuitäten enthaltenden Seismogramm-Sektion

  - bezogen auf die Achse des Tunnels und/oder
  - radial zum Tunnel bezogen

dargestellt werden.

Vorteilhafte Ausgestaltungen der Erfindung sind in weiteren Ansprüchen angegeben. So können sich die folgenden Vorteile ergeben:

i) Da gemäss der vorliegenden Erfindung mehrere Schüsse zu einer Schussgruppe zusammengefasst werden, bringt dies eine erhebliche Beschleunigung des Verfahrens zur Voraus- und Seitenerkundung und somit eine Verkürzung der Ausfallzeiten, da keine manuellen Interaktionen des Baustellenpersonals wie das Neuanlegen des Schiesskabels an die Sprengladungen zwischen den einzelnen Schüssen mehr erforderlich sind. Diese erhebliche Beschleunigung des Verfahrens bewirkt auch eine höhere Akzeptanz des Verfahrens durch das Baustellenpersonal, was zu einer Erhöhung der Qualität der mit dem Verfahren verbundenen Tätigkeiten führt wie zB eine wirkungsvolle Verdämmung der Sprengladung im Schussloch. Die vorgenannte Beschleunigung des Verfahrens ist besonders vorteilhaft bei der Seitenerkundung bestehender Tunnels, da dadurch die Sperrzeiten für den Verkehr (Eisenbahn oder Automobile) deutlich reduziert werden können.

ii) Die von den Empfängern registrierten Wellen müssen von den einzelnen gezündeten Sprengladungen separiert werden. Das ist zwar ein Mehraufwand zur Datengewinnung für das Auswerteprogramm. Diese Separation erlaubt jedoch die gleiche Auswertung der registrierten Wellen wie das aus dem Stand der Technik bekannte Einzelschussverfahren und somit einerseits eine Wiederverwendbarkeit des bekannten Auswerteprogramms und andererseits sind das Auswerteprogramm und die verwendeten Rechner selber universell einsetzbar unabhängig von der Art des Schiessens.

iii) Das Zusammenfassen von Sprengladungen zu einer Schussgruppe und die nacheinander in einem zeitlichen Abstand gezündeten Sprengladungen erlauben, abhängig der von den Empfängern registrierten Wellen und damit abhängig von der vorgenommenen Auswertung die nachfolgende Schussgruppe bezüglich der Stärke der Sprengladungen entsprechend zu dimensionieren. Beim Einzelschussverfahren gemäss dem Stand der Technik ist dies zwar nicht ausgeschlossen, doch ist damit eine weitere Verlängerung der Dauer des Verfahrens zur Vorauserkundung verbunden, da pro Schuss nicht nur das Schiesskabel umzuhängen ist, sondern auch noch neu zu laden ist.

In einer bevorzugten Ausführungsform der Erfindung werden die Schuss- und Empfängerlöcher ausgemessen, dass daraus die genaue Lage der Empfänger und der Sprengladungen hervorgeht und die gemessenen Lagedaten werden als Parameter dem Auswerteprogramm zugeführt. Dies hat den grossen Vorteil, dass baustellenbedingte Vorgaben wie zB

- Stahlbögen zur Absicherung der Tunnelfirste,
- grössere Ungenauigkeiten beim Bohren der Löcher oder
- bestehende kleine Nischen/Ausbuchtungen eines bereits in Betrieb befindlichen Tunnels oder Tunnelabschnittes keinen Einfluss auf die Auswerteergebnisse der Voraus- und Seitenerkundung bewirken.

Die Erfindung wird nachfolgend anhand der Zeichnung beispielsweise näher erläutert. Dabei zeigen:

Figur 1 Seismische Aufzeichnung der direkten Kompressionswellen einer Schussgruppe von 5 Schüssen;

Figur 2 Seismische Aufzeichnung von 4 Schussgruppen mit jeweils 5 Schüssen;

Figur 3 Seismische Aufzeichnungen einer Schussgruppe von zwei Schüssen an unterschiedlichen Empfängerorten bei gleichen Laufwegen der Kompressionswellen;

Figur 4 Seismische Aufzeichnungen einer Schussgruppe von zwei Schüssen an unterschiedlichen Empfängerorten bei verschieden langen Laufwegen der Kompressionswellen;

Figur 5a Tunnelquerschnitt mit der Anordnung von Empfängern und Schusslöchern längs der beiden Ulmenstrecken;

Figur 5b Tunnellängsdarstellung mit Tunnelbrust und davor an den Ulmenstrecken angeordneten Schusslöchern und Empfängerlöchern.

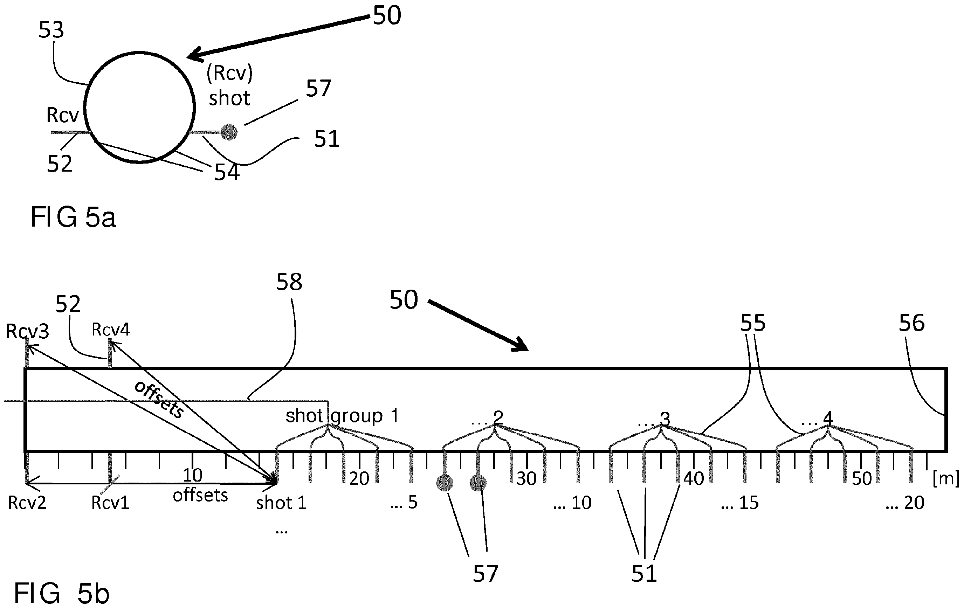

Figur 5b zeigt eine Längsdarstellung eines Tunnels 50 mit der Tunnelbrust 56, also mit einer Vortriebsrichtung von links nach rechts. Im bereits ausgebrochenen Teil des Tunnels 50 sind 4 Empfängern Rcv1, ... , Rcv4 paarweise gegenüber in Empfängerlöchern 52 angebracht. Der Abstand zwischen den Empfängerlöchern beträgt typischerweise 5m. Unter dem Begriff Empfänger wird eine Einheit verstanden, die einen Sensor enthält, der zur Registrierung von Wellen aus der Felsstruktur vorgesehen ist. Typischerweise ist ein solcher Sensor als Beschleunigungssenor/Accelerometer ausgebildet. Diese Einheit wird in ein Empfängerloch 52 eingeschoben. Im folgenden wird nicht mehr strikt unterschieden zwischen den Empfängerlöchern 52 (=Bohrlöcher) und den einen Sensor enthaltenden Empfängern Rcv1, ... , Rcv4, sondern stets auf die in den Empfängerlöchern 52 befindlichen Empfänger Rcv1, ... , Rcv4 Bezug genommen. Der Begriff «Offset» steht für die Distanz zwischen einem seismischen Empfänger Rcv1, ... , Rcv4 und einer in einem Schussloch 51 eingeführten kleinen Sprengladung 57. Der Übersichtlichkeit halber sind nur zwei Sprengladungen 57 in der Figur 5B explizit dargestellt, es sind jedoch für das Verfahren sämtliche Schusslöcher 51 mit einer Sprengladung 57 versehen. Bei der Anordnung der seismischen Empfänger Rcv1, ... , Rcv4 gemäss den Figuren 5a und 5b ist folgende Bedingung wichtig: Die vier seismischen Empfänger Rcv1, ... , Rcv4 sind genau radial von der Tunnelwand in einem bestimmten Abstand, typischerweise 2m tief in das Gebirge versetzt. In der Darstellung gemäss Figur 5B ist der Abstand zwischen der Tunnelbrust 56 und dem zur Tunnelbrust nächstliegenden Schussloch 51 als eine Momentan-Aufnahme anzusehen. Dieser Abstand kann wenige Meter wie auch zB 50m bis 100m betragen.

In Figur 5a ist der Tunnelquerschnitt 53 mit Empfängern Rcv auf der einen Ulmenstrecke und mit Sprengladungen 57 auf der anderen Ulmenstrecke dargestellt. Im Querschnitt auf der Seite der in Schusslöchern 51 eingeführten Sprengladungen 57 sind auch die beiden anderen Empfänger vorhanden: Dies ist in Figur 5a mit der Angabe (Rcv) dargestellt. Bezüglich Schusslöcher 51 und Sprengladungen 57 und dem Abfeuern einer Sprengladung wird im Folgenden der Sammelbegriff Schuss bzw. «shot» in den Figuren verwendet. Die Schusslöcher 51 weisen in der Darstellung gemäss der Figur 5a einen Abstand von 2m auf. Der Abstand der Schusslöcher 51 kann zwischen 1m und 2m betragen. Dieser Abstand ist vorzugsweise über alle Schusslöcher 51 im Wesentlichen äquidistant. Die Sprengladung 57 ist so dimensioniert, dass eine Explosion bezüglich des Schussloches 51 nicht zerstörend ist. Die Sprengladung 57 wird im jeweiligen Schussloch 51 mit Wasser verdämmt oder das Schussloch 51 wird mit einer Dämmpatrone (nicht dargestellt in den Figuren) abgeschlossen , damit bei der Detonation der Sprengladung 57 möglichst viel Energie in den Fels übergeht. Die Abstände der einzelnen Schusslöcher 51 sind möglichst gleich festzulegen und liegen in einem Bereich von 1.5m bis 2m.

Die in den Figuren 5a und 5b gezeigte Anordnung - ohne die Zündkabel 55 - entspricht dem in der Beschreibungseinleitung erläuterten TSP-Verfahren, zB gemäss dem Dokument «3D Tunnel Seismic Prediction» [8].

Um die gemäss Aufgabenstellung geforderte signifikante Verringerung von Ausfallzeiten zu erreichen, werden nicht mehr Einzelschüsse abgefeuert, sondern vier oder fünf Schussgruppen mit je 4 bis 6 Schüssen gebildet. Die Schüsse einer Schussgruppe sind in einem zeitlichen Abstand von mindestens 1s zu zünden. Dies wird durch den Einsatz von in den handelsüblichen Zündern eingebaute Verzögerungsstufen gewährleistet. Handelsübliche Zünder weisen typische Verzögerungszeiten von etwa 1ms bis etwa 10s auf. Damit der zeitliche Abstand von mindestens 1s gewährleistet ist, sind die Zünder der verschiedenen Verzögerungszeiten entsprechend den einzelnen Schusslöchern 51 zuzuordnen. In Figur 5b sind die Schussgruppen mit shot group 1, ..., shot group 4 bezeichnet, die Zünder der einzelnen Sprengladungen einer Schussgruppe sind mit Zündkabel 55 verbunden, die dann zu einer in der Figur 5b nicht dargestellten in einem Sicherheitsabstand abgesetzten Auslösevorrichtung/Schiessmaschine geführt werden. Dabei wird zur Auslösevorrichtung bzw. Schiessmaschine nur ein einziges Schiesskabel 58 (2-Draht geführt). Der erste Schuss einer Schussgruppe muss dabei die wahre Nullzeit aufweisen. Als Verzögerungsstufe können auch elektronische programmierbare Zünder eingesetzt werden.

Die übliche Aufzeichnungsdauer von rund 500ms pro Schuss gemäss dem eingangs dargestellten im Stand der Technik praktizierten Einzelschussverfahren wird somit um eine Zeit verlängert, die sich aus der Anzahl der Schüsse einer Gruppe multipliziert mit 1 Sekunde (=Zündverzögerung) ergibt. Die übliche Aufzeichnungsdauer von rund 500ms ergibt sich aus der Laufzeit, die die reflektierten Raumwellen bei typischen Geschwindigkeiten von 1.5m/ms bis 6.5m/ms im Festgestein aus mindestens 250m voraus der Tunnelbrust benötigen, um zu den Empfängern Rcv1, ... , Rcv4 zu gelangen. Zusätzlich wird noch ein ausreichender Zeitpuffer berücksichtigt.

Die von den Empfängern Rcv1, ... , Rcv4 aufgezeichneten Signale (=Kompressions- und Scherwellen) einer Schussgruppe sind hintereinander in einer Aufzeichnungsspur enthalten und müssen anschliessend wieder zu Einzelspuren aus den jeweiligen Schüssen auseinandergeschnitten werden. Da die Zeitverzögerungen der Zünder nicht genau genug bekannt sind, müssen die Einzelspuren ab dem 2. Schuss so korrigiert werden, dass deren Nullzeit mit grösstmöglicher Präzision bestimmt werden kann.

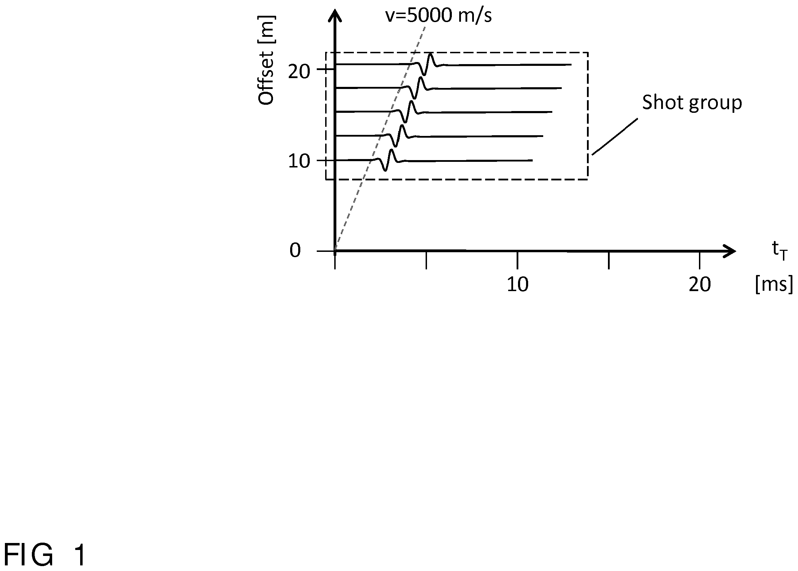

Figur 1 zeigt eine seismische Aufzeichnung über die Laufzeit $t_T$ der direkten Kompressionswellen von 5 von einem Empfänger Rcv einzeln aufgezeichneten Schüssen einer Schussgruppe shot group mit einem Schusslochabstand von 2m und einer Geschwindigkeit der Kompressionswelle von hier 5000 m/s wie dies typisch ist im Granit, was die gestrichelte Linie anzeigt. Der Begriff «Offset» steht für die Distanz einer einzelnen Sprengladung 57 zu einem Empfänger Rcv. Direkte Kompressionswelle steht hier für die von einem Empfänger Rcv registrierte Kompressionswelle direkt von der Sprengladung 57, also eine nicht an Diskontinuitäten reflektierte Welle.

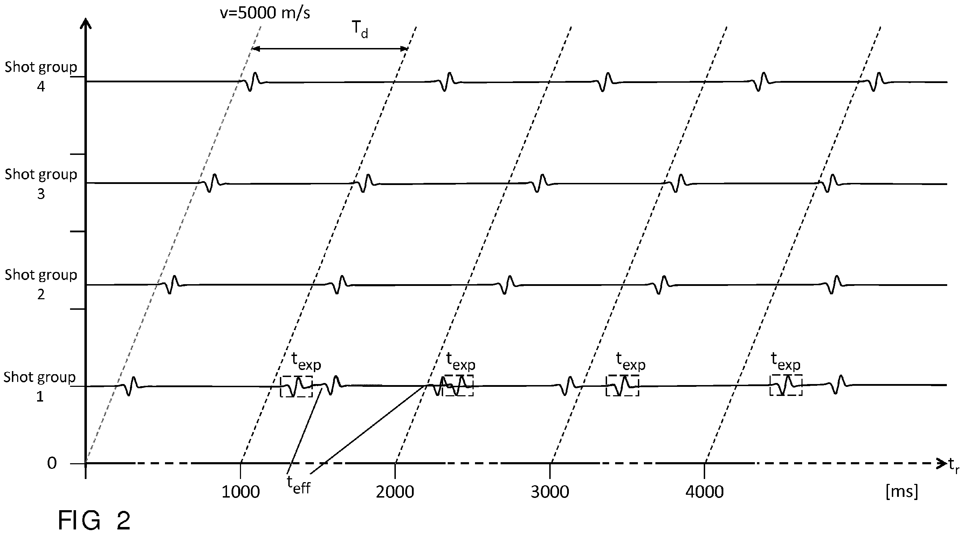

In Figur 2 sind die seismischen Aufzeichnungen von 4 Schussgruppen shot group 1, ..., shot group 4 mit jeweils 5 Schüssen shot 1, ..., shot 5 unter Verwendung von ein bis vier Sekunden Zündverzögerung der Schüsse 2 bis 5 einer jeden Schussgruppe shot group 1, ..., shot group 4 dargestellt. Die vom Hersteller des Zünders angegebene Zündverzögerung ist nicht hinreichend genau. Deshalb können die genauen Ankunftszeiten nicht direkt aus der Aufzeichnung abgelesen werden. In Figur 2 ist die erwartete Ankunftszeit $t_{exp}$ und die tatsächliche Ankunftszeit $t_{eff}$ einer direkten Kompressionswelle der ersten Schussgruppe shot group 1 dargestellt. Die Aufzeichnungszeitdauer ist hier etwa 5s, vgl Skala in Figur 2 mit 1000ms, 2000ms, .... Die Aufzeichnungen über die weiteren Schussgruppen shot group 2, , shot group 3 sind ebenfalls der Figur 2 zu entnehmen, allerdings aus Gründen der Übersichtlichkeit nicht mehr dargestellt mit der Unterscheidung erwartete Ankunftszeit $t_{exp}$ und tatsächliche Ankunftszeit $t_{eff}$.

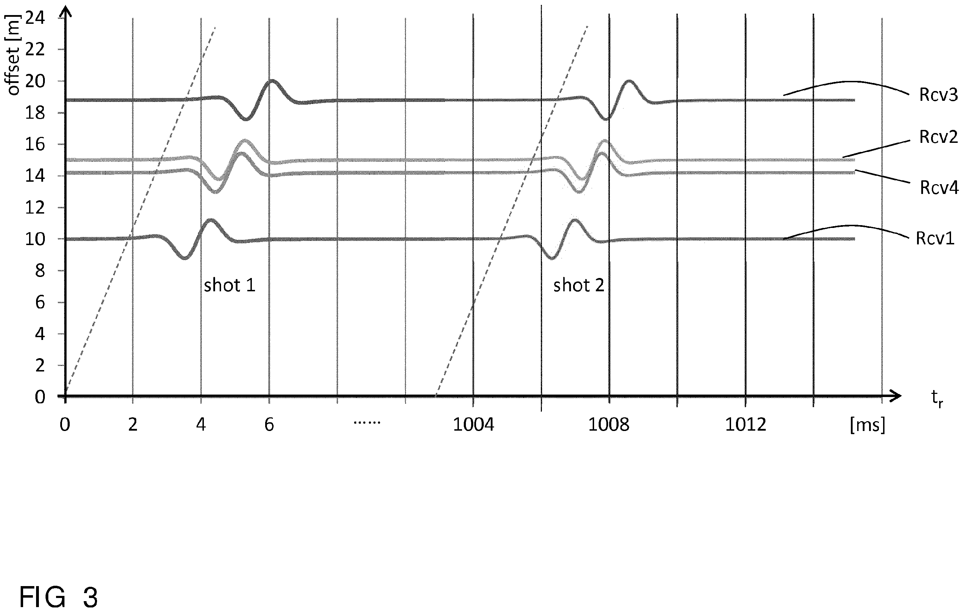

Die Figur 3 zeigt seismische Aufzeichnungen der direkten Kompressionswellen einer Schussgruppe von zwei Schüssen an unterschiedlichen Empfängerorten Rcv1, ... , Rcv4. Die gestrichelten Linien korrelieren die Ankunftszeiten der direkten Kompressionswelle entlang einer Geschwindigkeit von hier 5000m/s. Die Verzögerung der Zünder ist irrelevant. Die korrelierte Geschwindigkeit per gestrichelter Linie gilt nur, wenn die Laufwege der direkten Kompressionswelle respektive die Offsets gleich sind. Dies trifft nur bei in Line liegenden Empfängern und Schüssen zu. In der Figur 3 korrespondiert die Ordnung der angegebenen Offsets der Empfänger Rcv1, Rcv4, Rcv2 und Rcv3 (in dieser Reihenfolge!) zugeordneten Aufzeichnungen mit der Anordnung von Schusslöchern 51 und den Empfängern Rcv1, ... , Rcv4 gemäss der Figur 5b.

Die Darstellungen in den Figuren 1, 3 und 4 sind eigentlich dreidimensional, da die Aufzeichnungen eine Amplitude des empfangenen Signals darstellen und nicht in der Ordinate eine "Verschiebung" des Offsets.

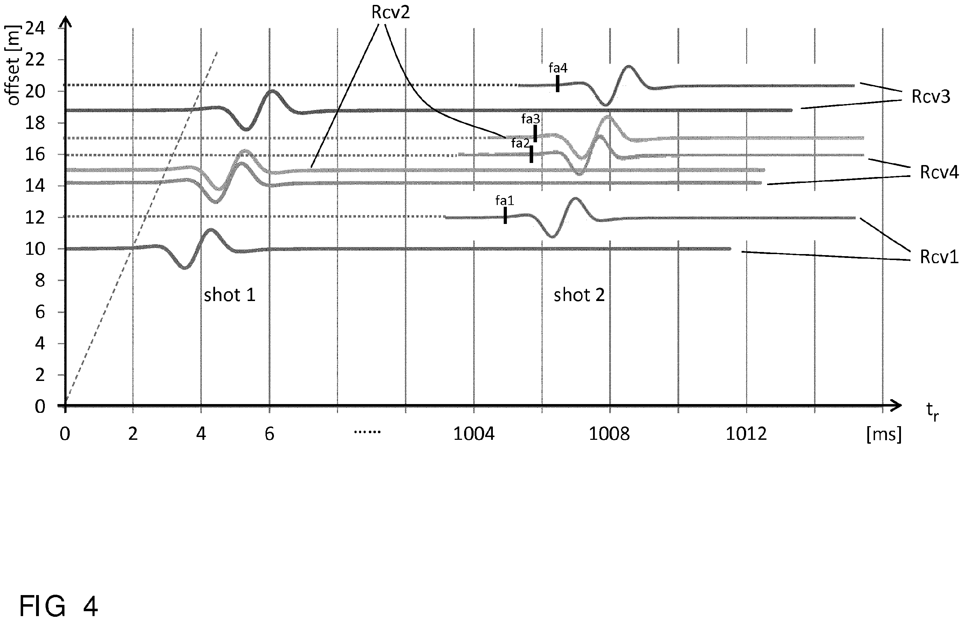

Figur 4 zeigt seismische Aufzeichnungen einer Schussgruppe von zwei Schüssen an unterschiedlichen Empfängerorten Rcv1, ... , Rcv4 bei verschieden langen Laufwegen der Kompressionswellen. Die gestrichelte Linie korreliert die Ankunftszeit der direkten Kompressionswelle entlang einer Geschwindigkeit von hier 5000m/s für den ersten Schuss. Die Verzögerung der Zünder ist irrelevant. Wenn die Laufwege der direkten Kompressionswelle respektive die Offset-Unterschiede verschieden sind, müssen die Geschwindigkeiten der nachfolgenden Schüsse innerhalb einer Schussgruppe durch deren Ankunftszeitdifferenz der direkten Kompressionswelle und dem dazugehörigen Offset (=Laufweg der direkten Kompressionswelle) berechnet werden. Mit fa1, fa2, fa3, fa4 ist in Figur 4 die erste Ankunft (first arrival) einer Kompressionswelle bezeichnet; die Nummer bezeichnet die Reihenfolge der ersten Ankunft relativ zum Eingang bei den anderen Empfängern. Die Geschwindigkeit v wird für alle Permutationen von Empfängerpaaren berechnet und anschliessend aus ihnen eine mittlere Geschwindigkeit gebildet. Formel zur Berechnung einer einzelnen Geschwindigkeit:

$$v(shot\ 2) = (off2(shot\ 2) - off1(shot\ 2))/(fa2(shot\ 2) - fa1(shot\ 2)) \ .$$

off1, off2 stehen für den Offset zwischen Schuss shot 2 (genau: die dem Schuss 2 entsprechende Sprengladung 57) und dem jeweiligen Empfänger Rcv1 bzw Rcv2.

Die zum Teil gestrichelten (=versetzten) Spuren des zweiten Schusses deuten den wahren Offset zum jeweiligen Empfänger an.

Zur Auswertung der empfangenen Signale werden wie im eingangs dargestellten Einzelschussverfahren die gebohrten Schusslöcher 51 genau ausgemessen und die Daten für die Lage der Sprengladungen 57 für das Auswerteprogramm als Parameter eingegeben. Dies sind im einzeln:

- Abstand der Schusslöcher 51 gemessen an der Ulmenstrecke,
- Tiefe des Schussloches 51,
- Horizontalwinkel des Schussloches 51 und
- Neigungswinkel des Schussloches 51.

Ebenso werden die Abstände der Empfängerlöcher 52 untereinander wie auch relativ zu einem ersten Schussloch 51 (=erstes Schussloch im Sinne der Vortriebsrichtung) ausgemessen. Ebenso werden auch die Neigungs- und Horizontalwinkel der Empfängerlöcher 52 ausgemessen. Die Tiefe des Empfängerloches 52 ist nicht relevant, da die Tiefe durch die Konstruktion der Empfänger Rcv vorgegeben ist.

Mit den Figuren 5a und 5b ist eine bevorzugte Ausführungsform der Anordnung von Schusslöchern 51 und Empfängerlöchern 52 dargestellt. Im praktischen Fall kann es jedoch vorkommen, dass gerade bei zu erstellenden Tunneln Stahlbögen zur Sicherung der Tunnelfirste eingefügt werden müssen und somit Schusslöcher 51 und Empfängerlöcher 52 nicht auf der ganzen Strecke der Schusslöcher im oben dargestellten Raster gebohrt werden können. Dies beeinträchtigt das hier erläuterte Verfahren nicht, da die Lage der Sprengladungen 51 und die Lage der Empfänger Rcv1, ... , Rcv4 ausgemessen werden und als Parameter im Auswerteprogramm entsprechend Eingang finden.

Nach dieser Darstellung der Anordnung von Empfängern Rcv1, ... , Rcv4 und zu Schussgruppen shot group 1, ... , shot group 4 in Schusslöchern 51 angebrachten Sprengladungen 57 und deren Schüsse shot 1, ... , shot 4 erfolgt nun eine Beschreibung des Verfahrens zur Voraus- und Seitenerkundung beim Tunnelbau:

(I) Zur Erzeugung von im Gebirgsmassiv zu reflektierenden Wellen werden vier bis fünf Schussgruppen zu je vier bis sechs Schüssen gezündet. Gemäss den Angaben in den Figuren sind es vier Schussgruppen zu je 5 Schüssen. Die Schüsse shot 1, shot 2, ... einer Schussgruppe weisen einen zeitlichen Abstand von 1s auf. Dies wird durch entsprechende Verzögerungsstufen in den handelsüblichen Zündern gewährleistet. Nur der erste Schuss einer Schussgruppe weist eine wahre Nullzeit auf, die vom Auswerteprogramm von der Schiessmaschine abgenommen wird.

(II) Gegenüber dem bisherigen Verfahren mit den Einzelschüssen verlängert sich die Aufzeichnungzeit um die Anzahl der Schüsse einer Gruppe multipliziert mit 1s.

(III) Die empfangenen reflektierten Wellen einer Schussgruppe sind hintereinander in einer Aufzeichnungsspur enthalten. Diese müssen nun zu Einzelspuren auseinandergeschnitten werden und können dann dem bekannten Verfahren mit dem Auswerteprogramm zur vortriebsbegleitenden Vorauserkundung zugeführt werden, um eine Seismogramm-Sektion zu berechnen, siehe zB Dokumente [6] und [8]. Dieselben Daten können mit dem Auswerteprogramm auch für die Seitenerkundung verwendet werden, wobei im Auswerteprogramm andere Einstellungen der Parameter für die Prozesse der Signaldatenbearbeitung gewählt werden müssen. So werden zB richtungsabhängige Einstellungen vorgenommen, um den Fokus der Erkundung auf die Seite zu legen, so dass eher nur reflektierte Wellen aus der Richtung radial zur Tunnelwand betrachtet werden.

(IV) Das Auseinanderschneiden zu Einzelspuren ist nicht trivial, da die Nullzeiten ab dem 2. Schuss nicht genau bekannt sind, weil die Verzögerungsstufen der Zünder nicht hinreichend genau sind. Die notwendige Korrektur der Nullzeiten der Einzelspuren ab dem 2. Schuss einer Schussgruppe wird mittels einer Kombination zweier Methoden durchgeführt. Die Lage der vier seismischen Empfänger Rcv1, ..., Rcv4 einschliesslich deren Offsets zu den Sprengladungen 57 ist genau bekannt, vgl. Erläuterungen zu den Figuren 5a und 5b und zu Figur 4. Die Gesamtheit dieser gemessenen Daten der Anordnung von Empfängern Rcv und Sprengladungen 57 wird bei der Bestimmung der Nullzeiten zusätzlich berücksichtigt. Die Kombination der vorgenannten zwei Methoden beinhaltet:

(IV.1)
Die erste Methode berücksichtigt lediglich die wahren Nullzeiten der ersten Schüsse aller Schussgruppen. Werden die Ankunftszeiten der direkten Kompressionswellen der jeweils ersten Schüsse in Abhängigkeit vom Offset dargestellt, so ergibt sich eine Geradengleichung mit einer Steigung, deren Kehrwert der Geschwindigkeit der direkten Kompressionswellen entspricht. Da die Geschwindigkeit nur im Idealfall eines homogenen, voll elastischen Gebirges zwischen allen Schüssen und Empfängern konstant ist und dieser Idealfall nicht im realen Gebirge eintritt, wird das lineare Regressionsverfahren zur Ermittlung der Geschwindigkeit angewendet.
(IV.2)
Die zweite Methode misst bzw. bestimmt die Differenzen der Ankunftszeiten der direkten Kompressionswelle der dem ersten Schuss nachfolgenden Schüsse an allen seismischen Empfängern Rcv1, ..., Rcv4 und ermittelt aus den berechneten Laufwegdifferenzen gemäss der vorgenannten exakten Ausmessung von Schusslöchern 51 und Empfängerlöchern 52 eine mittlere Geschwindigkeit der direkten Kompressionswelle.

(V) Die berechnete Geschwindigkeit der Methode 1 (IV.1) und die mittlere Geschwindigkeit der Methode 2 (IV.2) werden wiederum gemittelt und dieser Mittelwert der Geschwindigkeit wird zur Korrektur der Nullzeit der auseinandergeschnittenen bzw. separierten Einzelspuren verwendet, indem jede Einzelspur entlang der Zeitachse zu geschoben wird, dass ihre bekannte Erstankunftszeit der direkten Kompressionswelle mit dem Zeitpunkt der sich aus dem Mittelwert der Geschwindigkeit ergebenen Zeit übereinstimmt.

(VI) Etwaige fehlende Datenwerte am Anfang oder am Ende einer Einzelspur werden mit Werten aufgefüllt, die durch statistisch gemittelte Werte des natürlichen Rauschens vor Ankunft der direkten Kompressionswelle der jeweiligen Spur erzeugt worden sind, so dass jede Einzelspur die notwendige selbe Datenlänge aufweist.

Zu einer Schussgruppe wird ein Schiesskabel 58 geführt. Die Zündung erfolgt durch eine in einem Sicherheitsabstand angeordnete Zündmaschine, die vom Baustellenpersonal betätigt wird. Die Abfolge der Zündung der Schussgruppen shot group 1, shot group 2, ... kann wie folgt ausgestaltet werden:

a) Aufgrund der Ergebnisse aus einer ersten Schussgruppe kann erforderlichenfalls die Ladung der zweiten Schussgruppe nachdimensioniert werden, abhängig von Beschaffenheit der vorzufindenden Felsformation. Neudimensionieren heisst: Es ist je nach dem eine stärkere oder schwächere Ladung für die nachfolgende Schussgruppe vorzusehen. Wichtig ist, dass die Dimensionierung so erfolgt, dass die Detonation einer Sprengladung 57 nicht zerstörend ist.

b) Es ist auch möglich, alle Schussgruppen shot group 1, shot group 2, ... zu Beginn vorzuladen und durch Umhängen des Schiesskabels 58 an einer Schussgruppe die betreffende Schussgruppe von der Zündmaschine dann zu zünden. Im Tunnelbau ist es aus Sicherheitsgründen und auch aus praktischen Gründen nicht möglich, mehrere Schiesskabel 58 von der Zündmaschine zu einer Schussgruppe zu führen.

Die vorgenannten besonderen Ausführungsformen des erfindungsgemässen Verfahrens, wie zB

- Anzahl Schüsse pro Schussgruppe,
- Anzahl Schussgruppen,
- der zeitliche Abstand der Schüsse in einer Schussgruppe,
- das Nachdimensionieren der Sprengladungen für die nachfolgende Schussgruppen,
- das Bestimmen der wahren Nullzeit der Schüsse shot 2, ...,
- der Abstand der Schusslöcher 51 im Bereich von 1m bis 2m,
- der Abstand der Empfängerlöcher 52 von bis zu 5m, sind voneinander unabhängig und können deshalb frei kombiniert werden.

**Liste der Bezugszeichen, Abkürzungen und Glossar**

| | |
|---|---|
| 50 | Tunnel |
| 51 | Schusslöcher |
| 52 | Empfängerlöcher |
| 53 | Tunnelquerschnitt |
| 54 | Ulmen |
| 55 | Zündkabel pro Schussgruppe |
| 56 | Tunnelbrust |
| 57 | Sprengladung |
| 58 | Schiesskabel |
| fa1, fa2, fa3, fa4 | erste Ankunft (first arrival) einer Kompressionswelle; die Nummer bezeichnet die Reihenfolge der ersten Ankunft relativ zum Eingang bei den anderen Empfängern Rcv x n Anzahl Schüsse pro Schussgruppe |
| Rcv1, Rcv2, Rcv3, Rcv4; Rcv | Empfänger |
| shot 1, shot 2, shot 3, shot 4, shot | Schüsse einer Schussgruppe |
| shot group 1, shot group 2, shot group 3, shot group 4, | shot group Schussgruppe mit n Schüssen offset Distanz zwischen einem Empfänger Rcv und einer Sprengladung 57 in einem Schussloch 51 |
| $t_{eff}$ | tatsächliche Ankunftszeit einer direkten Kompressionswelle |
| $t_{exp}$ | erwartete Ankunftszeit einer direkten Kompressionswelle |
| $t_r$ | Aufzeichnungszeit |
| $t_T$ | Laufzeit / travel time |
| $T_d$ | Zünderverzögerung gemäss Herstellerangaben |
| TSP | «Tunnel Seismic Prediction»; geophysikalische Methode zur schnellen geologische und geotechnischen Vorauserkundung im dreidimensionalen Raum |

**Liste der zitierten Dokumente**

[1] Lorenzo Petronio and Flavio Poletto (2002).

«Seismic-while-drilling by using tunnel boring machine noise»
Geophysics, 67(6), 1798-1809.

[2] Borm, G., Giese, R., Otto, P., Amberg, F., & Dickmann, T. (2003) .

«Integrated Seismic Imaging System For Geological Prediction During Tunnel Construction. International Society for Rock Mechanics»
10th ISRM Congress, 8-12 September 2003, Sandton, South Africa.

[3] Thomas Bohlen, Ulrich Lorang, Wolfgang Rabbel, Christof Müller, Rüdiger Giese, Stefan Lüth, Stefan Jetschny (2007).

«Rayleigh-to-shear wave conversion at the tunnel face - From 3D-FD modeling to ahead-of-drill exploration»
Geophysics, Nov 2007, Vol. 72, No. 6, pp. T67-T79

[6] Stefan Jetschny, Thomas Bohlen, Andre Kurzmann (2011).

«Seismic prediction of geological structures ahead of the tunnel using tunnel surface waves»
Geophysical Prospecting, Volume 59, Issue 5, pages 934-946, September 2011.

[8] TSP 303 See ahead - build safer

«3D Tunnel Seismic Prediction»
vom Internet heruntergeladen am 29.07.2016: **http://www.ambergtechnologies.ch/en/products/tunnel-seismics/tsp-303/**

[9] «Predicting ahead of the face»TUNNELS & TUNNILING, APRIL 1996; p. 24 - p. 30

[10] WO 2009/077102 A1

«IMPULSGENERATOR, INSBESONDERE ZUR ANREGUNG SEISMISCHER WELLEN»
GEOFORSCHUNGSZENTRUM POTSDAM
14473 Potsdam (DE)

**Patentansprüche**

1. Verfahren zur Voraus- und Seitenerkundung der einen Tunnel (50) umgebenden Felsstruktur, wobei

   - auf einer Ulmenstrecke des Tunnels (50) eine Mehrzahl von radial zum Tunnel (50) angeordneten Schusslöchern (51) je mit einer Sprengladung (57) gefüllt werden,
   - entfernt von der Schusslöchern (51) wenigstens zwei auf beiden Ulmenstrecken paarweise gegenüberliegende Empfängerlöcher (52) für die Aufnahme von Empfängern (Rcv1, ..., Rcv4) vorgesehen sind und die Empfänger (Rcv1, ..., Rcv4) durch das Zünden der Sprengladung (57) erzeugte Schüsse ausgelöste direkte und von Felsdiskontinuitäten der Felsstruktur reflektierte Wellen registrieren;
   **dadurch gekennzeichnet, dass**
   - mehrere in aufeinanderfolgenden Schusslöchern (51) befindliche Sprengladungen (57) zu einer Schussgruppe zusammengefasst werden und nacheinander in einem zeitlichen Abstand gezündet werden, wobei der zeitliche Abstand der Zündung durch den einzelnen Sprengladungen (57) zugeordnete Zünder mit einer entsprechenden Verzögerungsstufe definiert ist;
   - die von den Empfängern (Rcv1, ..., Rcv4) registrierten Wellen zu einer den einzelnen Schüssen (57) zugeordneten Aufzeichnung als Einzelspuren separiert werden und so einem Auswerteprogramm zugeführt werden;
   - mittels des Auswerteprogramms diese Wellen zu einer die Felsdiskontinuitäten enthaltenden Seismogramm-Sektion

     - bezogen auf die Achse des Tunnels und/oder
     - radial zum Tunnel bezogen
     dargestellt werden.

2. Verfahren nach Anspruch 1

**dadurch gekennzeichnet, dass**

die Verzögerungsstufen so dimensioniert sind, dass der zeitliche Abstand zwischen den einzelnen Zündungen der Sprengladungen mindestens 1s beträgt.

3. Verfahren nach einem der Ansprüche 1 oder 2,

**dadurch gekennzeichnet, dass**

vier Schussgruppen zu je fünf Schüssen vorgesehen sind.

4. Verfahren nach einem der Ansprüche 1 bis 3,

**dadurch gekennzeichnet, dass**

nach dem Zünden einer Schussgruppe aufgrund der durch die Empfänger (Rcv1, ..., Rcv4) registrierten direkten und von Felsdiskontinuitäten reflektierte Wellen die Sprengladungen (57) der folgenden Schussgruppe neu dimensioniert werden.

5. Verfahren nach einem der Ansprüche 1 bis 4,

**dadurch gekennzeichnet, dass**

von Schussloch (51) zu Schussloch (51) je ein Abstand von 1m bis 2m vorgesehen ist.

6. Verfahren nach Anspruch 5,

**dadurch gekennzeichnet, dass**

die Schusslöcher (51) im wesentlichen äquidistant angeordnet sind.

7. Verfahren nach einem der Ansprüche 1 bis 6,

**dadurch gekennzeichnet, dass**

die räumliche Lage einer jeden Sprengladung (57) und eines jeden Empfängers (Rcv1, ..., Rcv4) ausgemessen wird und die gemessenen Lagedaten dem Auswerteprogramm als Parameter zugeführt werden.

8. Verfahren nach Anspruch 7,

**dadurch gekennzeichnet, dass**

zur Separation der registrierten Wellen als Einzelspuren die Nullzeit der dem ersten Schuss folgenden Schüsse einer Schussgruppe bestimmt wird durch:

- Darstellung der Ankunftszeiten der direkten Kompressionswellen der jeweils ersten Schüsse aller in Abhängigkeit von der Offset genannten Distanz zwischen einem Empfänger (Rcv) und der einem Schuss entsprechenden Sprengladung (57);
- Bildung einer Geradengleichung mit einer Steigung, deren Kehrwert der Geschwindigkeit der direkten Kompressionswellen entspricht, wobei eine mittlere Geschwindigkeit der direkten Kompressionswellen aus Laufwegdifferenzen mittels linearer Regression gebildet wird.

9. Verfahren nach Anspruch 7,

**dadurch gekennzeichnet, dass**

zur Separation der registrierten Wellen als Einzelspuren die Nullzeit der dem ersten Schuss einer Schussgruppe (shot group) folgenden Schüsse bestimmt wird durch:

- Bestimmung der Differenzen der Ankunftszeiten der direkten Kompressionswelle der dem ersten Schuss (shot 1) nachfolgenden Schüsse an den Empfängern (Rcv1, ... Rcv4) von der Ankunftszeit des ersten Schusses;
- Ermittlung einer mittleren Geschwindigkeit der direkten Kompressionswelle aus Laufwegdifferenzen gemäss den gemessenen Lagedaten mittels linearer Regression.

10. Verfahren nach den Ansprüchen 8 und 9,

**dadurch gekennzeichnet, dass**

- die gemäss Anspruch 8 gebildete mittlere Geschwindigkeit und die gemäss Anspruch 9 ermittelte mittlere Geschwindigkeit gemittelt wird;
- Verwendung der gemittelten mittleren Geschwindigkeit zur Korrektur der Nullzeit der separierten Einzelspuren, indem jede Einzelspur entlang der Zeitachse geschoben wird, so dass die bekannte Erstankunftszeit der direkten Kompressionswelle mit dem Zeitpunkt der sich aus der gemittelten mittleren Geschwindigkeit ergebenen Zeit übereinstimmt.

**11.** Verfahren nach Anspruch 10,

**dadurch gekennzeichnet, dass**
etwaige fehlende Datenwerte am Anfang oder am Ende einer Einzelspur mit Werten aufgefüllt werden, die durch statistisch gemittelte Werte des natürlichen Rauschens vor Ankunft der direkten Kompressionswelle der jeweiligen Spur erzeugt worden sind, so dass jede Einzelspur die selbe Datenlänge aufweist.


**Claims**

**1.** Method for the ahead and aside exploration of the rock structure surrounding a tunnel (50), wherein

- on an elm section of the tunnel (50) a plurality of shot holes (51) is arranged radially with respect to the tunnel (50) and each shot hole (51) is filled with an explosive charge (57),
- at least two receiver holes (52) for receiving receivers (Rcv1, ..., Rcv4) are provided at a distance from the shot holes (51), opposite one another in pairs on both elm sections, and the receivers (Rcv1, ..., Rcv4) register direct waves generated by the detonation of the explosive charge (57) and waves reflected by rock discontinuities of the rock structure;
**characterised in that**
- a plurality of explosive charges (57) located in successive firing holes (51) are combined into a firing group and are fired successively at a time interval, the time interval of the firing being defined by detonators associated with the individual explosive charges (57) with a corresponding delay step;
- the waves registered by the receivers (Rcv1, ..., Rcv4) are separated as individual tracks to form a recording associated with the individual shots (57) and are thus fed to an evaluation program;
- by means of the evaluation program, these waves are combined to form a seismogram section containing the rock discontinuities

- related to the axis of the tunnel and/or
- radially to the tunnel.

**2.** Method according to claim 1

**characterised in that**
the delay steps are dimensioned such that the time interval between the individual firing of the explosive charges is at least 1s.

**3.** Method according to one of the claims 1 or 2,

**characterised in that**
four groups of five shots each are provided.

**4.** Method according to one of the claims 1 to 3,

**characterised in that**
after the firing of a group of shots, the explosive charges (57) of the following group of shots are redimensioned on the basis of the direct waves registered by the receivers (Rcv1, ..., Rcv4) and reflected by rock discontinuities.

**5.** Method according to any one of claims 1 to 4,

**characterized in that**
a distance of 1m to 2m is provided from shot hole (51) to shot hole (51).

6. Method according to claim 5,

   **characterised in that**
   the shot holes (51) are arranged substantially equidistantly.

7. Method according to one of the claims 1 to 6,

   **characterized in that**
   the spatial position of each explosive charge (57) and of each receiver (Rcv1, ..., Rcv4) is measured and the measured position data are fed to the evaluation program as parameters.

8. Method according to claim 7,

   **characterised in that**
   for the separation of the registered waves as individual tracks, the zero time of the shots of a shot group following the first shot (shot 1) is determined by:

   - Representation of the arrival times of the direct compression waves of the respective first shots of all as a function of the distance between a receiver (Rcv) and the explosive charge (57) corresponding to a shot;
   - forming a linear equation having a slope whose reciprocal corresponds to the velocity of the direct compression waves, wherein an average velocity of the direct compression waves is formed from travel distance differences using linear regression.

9. Method according to claim 7,

   **characterised in that**
   for separating the registered waves as individual tracks, the zero time of the shots following the first shot of a shot group is determined by:

   - determining the differences of the arrival times of the direct compression wave of the shots following the first shot (shot 1) at the receivers (Rcv1, ... Rcv4) from the arrival time of the first shot;
   - determining a mean velocity of the direct compression wave from travel path differences according to the measured position data using linear regression.

10. Method according to claims 8 and 9,
    **characterized in that**

    - the mean velocity formed according to claim 8 and the mean velocity determined according to claim 9 are averaged;
    - using the averaged mean velocity to correct the zero time of the separated individual tracks by shifting each individual track along the time axis so that the known first arrival time of the direct compression wave coincides with the time resulting from the averaged mean velocity.

11. Method according to claim 10,

    **characterised in that**
    any missing data values at the beginning or end of an individual track are filled with values generated by statistically averaged values of the natural noise before the arrival of the direct compression wave of the respective track, so that each individual track has the same data length.

**Revendications**

1. Méthode d'exploration en avant et en latérale de la structure rocheuse entourant un tunnel (50), dans laquelle

- sur une section d'orme du tunnel (50), une pluralité de trous de tir (51) disposés radialement par rapport au tunnel (50) sont chacun remplis d'une charge explosive (57),
- au moins deux trous de réception (52) pour recevoir des récepteurs (Rcv1, ..., Rcv4) sont prévus à une distance des trous de tir (51), opposés l'un à l'autre par paires sur les deux sections d'orme, et les récepteurs (Rcv1, ..., Rcv4) enregistrent les ondes directes générées par la détonation de la charge explosive (57) et les ondes réfléchies par les discontinuités de la structure rocheuse;

**caractérisé en ce que**

- une pluralité de charges explosives (57) situées dans des trous de tir successifs (51) sont combinées en un groupe de tir et sont tirées successivement à un intervalle de temps, l'intervalle de temps du tir étant défini par des détonateurs associés aux charges explosives individuelles (57) avec une temporisation correspondante;
- les ondes enregistrées par les récepteurs (Rcv1, ..., Rcv4) sont séparées en tant que pistes individuelles pour former un enregistrement associé aux détonations individuelles (57) et sont ainsi fournies à un programme d'évaluation,
- au moyen du programme d'évaluation, ces ondes sont transformées en une section de sismogramme contenant les discontinuités de la roche

- par rapport à l'axe du tunnel et/ou
- radiale par rapport au tunnel.

2. Méthode selon la revendication 1

**caractérisé en ce que**
les détonateur à temporisation sont dimensionnés de telle sorte que l'intervalle de temps entre les tirs individuels des charges explosives soit d'au moins 1s.

3. Méthode selon l'une des revendications 1 ou 2,

**caractérisé en ce que**
quatre groupes de tirs comprenant cinq tirs chacun sont prévus.

4. Méthode selon l'une des revendications 1 à 3,

**caractérisé en ce que**
après le tir d'un groupe de tirs, sur la base des ondes directes enregistrées par les récepteurs (Rcv1, ..., Rcv4) et réfléchies par les discontinuités de la roche, les charges explosives (57) du groupe de coups suivant sont redimensionnées.

5. Méthode selon l'une des revendications 1 à 4,

**caractérisé en ce que**
une distance de 1m à 2m est prévue d'un trou de tir (51) à un autre trou de tir (51), respectivement.

6. Méthode selon la revendication 5,

**caractérisé en ce que**
les trous de tir (51) sont disposés de manière sensiblement équidistante.

7. Méthode selon l'une des revendications 1 à 6,

**caractérisé en ce que**
la position spatiale de chaque charge explosive (57) et de chaque récepteur (Rcv1, ..., Rcv4) est mesurée et les données de position mesurées sont introduites comme paramètres dans le programme d'évaluation.

8. Méthode selon la revendication 7,

**caractérisé en ce que**
pour séparer les ondes enregistrées en tant que traces individuelles, le temps zéro des tirs d'un groupe de tirs suivant le premier tir est déterminé par:

- Représentation des temps d'arrivée des ondes de compression directe des premiers tirs respectifs de tous en fonction de la distance, appelée décalage, entre un récepteur (Rcv) et la charge explosive (57) correspondant à un tir ;
- former une équation de linéaire ayant une inclinaison, dans laquelle une vitesse moyenne des ondes de compression directe est formée à partir des différences de distance de déplacement en utilisant une régression linéaire.

9. Méthode selon la revendication 7,

   **caractérisé en ce que**
   pour séparer les ondes enregistrées en tant que traces individuelles, le temps zéro des tirs suivant le premier tir d'un groupe de tir est déterminé par :

   - Détermination des différences des temps d'arrivée de l'onde de compression directe des tirs suivant le premier tir (tir 1) aux récepteurs (Rcv1, ... Rcv4) par rapport au temps d'arrivée du premier tir ;
   - détermination d'une vitesse moyenne de l'onde de compression directe à partir des différences de trajectoire selon les données de position mesurées en utilisant une régression linéaire.

10. procédé selon les revendications 8 et 9,
    **caractérisé en ce que**

    - la vitesse moyenne formée selon la revendication 8 et la vitesse moyenne déterminée selon la revendication 9 sont moyennées;
    - l'utilisation de la vitesse moyennées pour corriger le temps zéro des traces individuelles séparées en décalant chaque trace individuelle le long de l'axe des temps de sorte que le premier temps d'arrivée connu de l'onde de compression directe coïncide avec le temps résultant de la vitesse moyenne.

11. Méthode selon la revendication 10,

    **caractérisé en ce que**
    les éventuelles valeurs de données manquantes au début ou à la fin d'une trace individuelle sont remplies avec des valeurs générées par des valeurs statistiquement moyennes du bruit naturel avant l'arrivée de l'onde de compression directe de la trace respective, de sorte que chaque piste individuelle a la même longueur de données.

FIG 1

FIG 2

FIG 3

EP 3 287 814 B1

FIG 4

EP 3 287 814 B1

FIG 5a

FIG 5b

EP 3 287 814 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009077102 A1

- CN 102434207 B

**In der Beschreibung aufgeführte Nicht-Patentliteratur**

- **LORENZO PETRONIO AND FLAVIO POLETTO.** Seismic-while-drilling by using tunnel boring machine noise. *Geophysics,* 2002, vol. 67 (6), 1798-1809
- **BORM, G., GIESE, R., OTTO, P., AMBERG, F., & DICKMANN, T.** Integrated Seismic Imaging System For Geological Prediction During Tunnel Construction. International Society for Rock Mechanics. *10th ISRM Congress,* 08. September 2013

- **THOMAS BOHLEN, ULRICH LORANG, WOLF-GANG RABBEL, CHRISTOF MÜLLER, RÜDIGER GIESE, STEFAN LÜTH, STEFAN JETSCHNY.** Rayleigh-to-shear wave conversion at the tunnel face From 3D-FD modeling to ahead-of-drill exploration. *Geophysics,* November 2007, vol. 72 (6), T67-T79
- **STEFAN JETSCHNY, THOMAS BOHLEN, ANDRE KURZMANN.** Seismic prediction of geological structures ahead of the tunnel using tunnel surface waves. *Geophysical Prospecting,* September 2011, vol. 59 (5), 934-946
- Predicting ahead of the face. *TUNNELS & TUNNILING,* April 1996, 24-30